(19) Europäisches Patentamt
European Patent Office
Office européen des brevets

(11) **EP 2 615 752 B1**

(12) **EUROPEAN PATENT SPECIFICATION**

(45) Date of publication and mention of the grant of the patent:
**09.07.2014 Bulletin 2014/28**

(51) Int Cl.:
**H04J 3/06** (2006.01)

(21) Application number: **12305053.6**

(22) Date of filing: **16.01.2012**

(54) **Computation of a delay difference in an optical network**

Berechnung einer Verzögerungsdifferenz in einem optischen Netzwerk

Calcul d'une différence de délai dans un réseau optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2013 Bulletin 2013/29**

(73) Proprietor: **Alcatel Lucent
75007 Paris (FR)**

(72) Inventors:
• **Ronchetti, Luigi
22100 COMO (IT)**
• **Gemelli, Riccardo
20019 Settimo Milanese MI (IT)**

(74) Representative: **Wetzel, Emmanuelle et al
Alcatel-Lucent Deutschland AG
Intellectual Property & Standards
Lorenzstrasse 10
70430 Stuttgart-Zuffenhausen (DE)**

(56) References cited:
**EP-A2- 0 616 444        WO-A1-2011/079460
US-A1- 2011 122 775**

**Description**

Technical field

The present invention generally relates to the field of optical networks. In particular, the present invention relates to a method for computing a difference between propagation delays of two transmission lines, in particular, of two optical fibers, in an optical network.

Background art

As known, in an optical network the network nodes are connected each other by means of fiber optic links. Typically each link connecting two network nodes comprises two fibers, namely one fiber for data transmission in one direction and another fiber for data transmission in the other direction between the two nodes.

In a synchronous network, the network nodes typically synchronize the frequency of their local clock and/or the time of the day (i.e. hours, minutes, seconds and possible fractions of seconds) of their local clock to a master node. Network protocols are known implementing the synchronization, such as the IEEE 1588-2008 protocol which is defined in document "IEEE Standard for a Precision Clock Synchronization Protocol for Networked Measurements and Control Systems" by IEEE Instrumentation and Measurements Society, July 24, 2008. An example of a network implementing such protocol is the network of UMTS/LTE ("Universal Mobile Telecommunications System /Long Term Evolution") base stations.

According to IEEE 1588-2008 protocol (see document cited above, chapter 6, paragraph 6.6.3, pp. 32-34), the master node sends a Sync message to a slave node and generates a first timestamp $t1$ indicating the time at which the master node sends the Sync message. The first timestamp $t1$ is sent to the slave node within the Sync message itself or within a Follow-Up message that the master node sends to the slave node after the Sync message. The slave node in turn receives the Sync message and generates a second timestamp $t2$ indicating the time at which the slave node receives the Sync message. The slave node then sends to the master node a Delay_Req message and generates a third timestamp $t3$ indicating the time at which the slave node sends such message. The master node receives the Delay_Req message and generates a fourth timestamp $t4$ indicating the time at which it receives such message and in turn sends to the slave node the fourth timestamp $t4$ within a Delay_Resp message.

At the end of the message exchange described above, the four timestamps $t1$, $t2$, $t3$, $t4$ are available at the slave node. The above described message exchange is typically periodically repeated. By using one or more of the four timestamps $t1$, $t2$, $t3$, $t4$, the slave node is able to synchronize the frequency and the time of the day of its local clock to those of the master node local clock.

In particular, the slave node is able to calculate the offset between the time of the day of its local clock and the time of the day of the master node local clock (assuming the two clocks are already frequency synchronized) by computing the difference between the timestamps $t2$ (time at which the slave node received the Sync message) and $t1$ (time at which the master node generated the Sync message) and then subtracting the mean propagation time MPT along each fiber of the link. In turn, the mean propagation time MPT may be computed according to the following equation:

$$MPT = \frac{(t2 - t1) + (t4 - t3)}{2}. \qquad [1]$$

WO 2011/079460 discloses a method and apparatus for detecting communication channel delay asymmetry between transmission line protection devices. The method comprises: calculating, repeatedly, clock disparity between clocks of the protection devices and communication delays at different paths of the communication channel; comparing the latest calculated clock disparity and communication delays with previously calculated clock disparities and communication delays, respectively; determining a channel switching has happened if a change of the calculated clock disparity exceeds a first threshold, or a change of the calculated communication delays for any path exceeds a second threshold; and determining the channel delays as asymmetrical if a difference between the calculated communication delays of the different paths after the channel switching exceeds a third threshold.

US 2011/122775 discloses to analyze routes of a packet network according to various transit delay metrics. Preferred packet network routes are selected between source and destination based on these metrics. In packet networks employing boundary clocks and transparent clocks, faulty boundary clocks and faulty transparent clocks are identified using the metrics.

EP 0 616 444 discloses improved Pseudo Noise Sequence based coarse ranging means for telecommunication systems such as PON-FITL-Systems with a TDMA frame structure comprising a main station and a number of substations. According to EP 0 616 444 coarse ranging is done at a fixed position within the upstream multiframe reserved for ranging, preferably for fine ranging. By applying a low power Pseudo Noise Sequence for coarse ranging and sampling the range at the side of the main station only within the fine ranging window, the position of which is known to the main station, a more accurate coarse ranging is achieved.

## Summary of the invention

The inventors have noticed that equation [1] above provides for computing the propagation delay along a fiber of the optical network by assuming that the clocks of the slave node and the master node are frequency synchronized. Moreover equation [1] is based on the further assumption that the propagation delay between the master node and the slave node (downlink direction) is equal to the propagation delay between the slave node and the master node (uplink direction).

In presence of any asymmetry in the propagation delays along the two directions, equation [1] above providing the propagation delay of each fiber may contain an error. Therefore, the slave node may not be able to properly synchronize the time of the day of its local clock to the time of the day of the master node clock.

Typically, asymmetry in the propagation delay along downlink and uplink fibers may be due to at least two different factors. On the one hand, asymmetry may rise due to the presence of switches and routers along the link, which may introduce variable delays in the data transmission. As known, the IEEE 1588-2008 protocol provides for computing the effective propagation delay of each link by compensating such kind of asymmetry by means of the so called "transparent clock" mechanism.

On the other hand, asymmetry in the propagation delays between any two network nodes may be due to the physical features of the fibers used (e.g. different lengths in the two directions). For instance, a typical value of the propagation delay of an optical fiber is about 5 $\mu$s per 1 km. In this case, a length difference in fibers of about 100 m will introduce an error of about 250 ns. Disadvantageously, the IEEE 1588-2008 protocol does not provide any mechanism for computing the propagation delay of the fiber in presence of such kind of asymmetry. Instead, methods are known for measuring the propagation delay along the fibers. Such methods are typically based on measuring the delay of every fiber in the network by means of some measurement equipment (such as, for instance, a reflectometer).

However, disadvantageously, the methods cited above are manual methods which may be used when deploying the network but which are complex and long to employ when the network is already deployed and, for instance, new fiber links have to be installed. Moreover, for instance, every time a fiber is repaired or replaced after a fiber failure, the measurement should be manually done again, which is time consuming and complex.

In view of the above, the inventors have addressed the problem of providing a method for computing the difference between the propagation delays of two transmission lines, in particular two optical fibers, in an optical network which overcomes the aforesaid drawbacks.

In particular, the inventors have addressed the problem of providing a method for computing the difference between the propagation delays of two transmission lines, in particular of two optical fibers, connecting two nodes of an optical network which is automatic and which allows taking into account the physical characteristics of the transmission lines.

In the following description and in the claims, the wording "state of a device" will be used to indicate a set of values stored in a register or the value of a counter or the like.

According to a first aspect, the present invention provides a method for computing a difference between a first propagation delay of a first transmission line and a second propagation delay of a second transmission line, wherein the first and second transmission lines connect a first node and a second node of an optical network, the method comprising, at the second node:

a) receiving first data from the first node along the first transmission line;
b) computing a time offset between a first clock signal recovered from the first data and a second clock signal generated at the second node;
c) swapping the first transmission line and the second transmission line;
d) receiving second data from the first node along the second transmission line; and
e) computing the difference on the basis of the first data, the second data and the time offset.

Preferably, step b) further comprises providing a device with a first sequence of states based on the first data, wherein the first sequence of states is a periodic sequence of states, the device changing its state at a rate correlated to a clock rate of the second clock signal.

Preferably, step b) further comprises monitoring the first sequence for a time interval and, after the time interval elapsed, determining a state of the device and computing the time offset based on the determined state of the device and the first data.

Preferably, step e) further comprises

- providing a further device with a second sequence of states based on the second data, wherein the second sequence of states is periodic, the further device changing its state a rate correlated to a clock rate of the first clock signal; and
- determining a state of the device and a state of the further device and computing the difference based on the determined state of the device, the determined state of the further device and the time offset.

Preferably, step b) further comprises

- providing the further device with the first sequence of states based on the first data, the further device changing its state at a rate correlated to a clock rate of the first clock signal; and
- after the time interval elapsed, determining a state of the device and a state of the further device and computing the time offset based on the determined state of the device and the determined state of the further device.

Preferably, the first data and the second data comprise output values of a linear feedback shift register.
Preferably, at step b) the time interval is a fraction of a maximum swap time indicative of a maximum time needed to swap the first transmission line and the second transmission line.
Preferably, the first data and the second data comprise at least one multiframe.
Preferably, step e) further comprises counting repetition periods of the fist sequence and the second sequence.
According to a second aspect, the present invention provides a node for an optical network, the node comprising a receiver configured to receive first data from a first transmission line, to swap the first transmission line and a second transmission line and to receive second data from the second transmission line, the node comprising a local clock with a clock rate, the receiver comprising a control module configured to:

- compute a time offset between a first clock signal recovered from the first data and a second clock signal generated by the local clock at the clock rate;
- compute a difference between a first propagation delay of the first transmission line and a second propagation delay of the second transmission line on the basis of the first data, the second data and the time offset.

Preferably, the receiver further comprises a device cycling through a first sequence of states based on the first data, the first sequence being periodic, the device being configured to change its state at a rate correlated to the clock rate of the second clock signal.
Preferably, the control module is further configured to monitor the first sequence for a time interval and, after the time interval elapsed, determine a state of the device and compute the time offset based on the determined state of the device and the first data.
Preferably, the receiver further comprises a further device configured to cycle through a second sequence of states based on the second data, the second sequence being periodic, the further device being configured to change its state a rate correlated to a clock rate of the first clock signal.
Preferably, the device and the further device are linear feedback shift registers.
Preferably, the device and the further device are Maximum Length Fibonacci linear feedback shift registers.

## Brief description of the drawings

Embodiments of the invention will be better understood by reading the following detailed description, given by way of example and not of limitation, to be read with reference to the accompanying drawings, wherein:

- Figure 1 shows two nodes of an optical network connected by two transmission lines according to a preferred embodiment of the present invention;
- Figure 2 shows the two nodes of Figure 1 when the transmission lines connecting them are swapped;
- Figure 3 is a flowchart illustrating the steps of the method of the present invention;
- Figures 4a-4g are time diagrams relating to the steps of the method of the present invention;
- Figures 5a and 5b shows two registers comprises within the nodes; and
- Figure 6 shows a cycle of states of the registers of Figures 5a and 5b.

## Detailed description of preferred embodiments of the invention

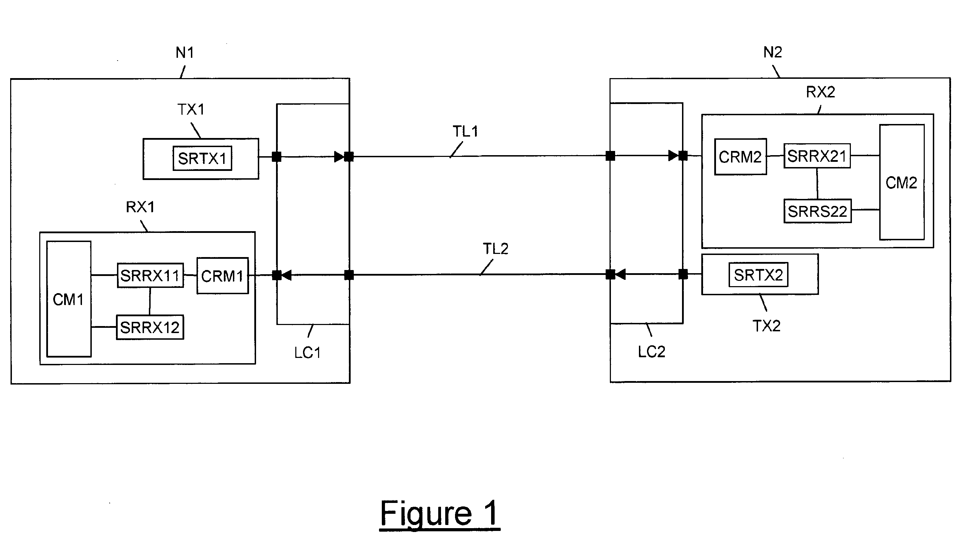

Figure 1 schematically shows a portion of an optical network comprising a first node N1 and a second node N2 according to a preferred embodiment of the present invention.
The first node N1 preferably comprises a transmitter TX1, a line connection portion LC1 and a receiver RX1. Moreover, the first node N1 preferably comprises a local clock (not shown in the drawings) generating a clock signal having a clock rate CR1. The clock rate of this local clock may be equal, for instance, to about 1 GHz.

The transmitter TX1 preferably comprises a register SRTX1. Preferably, the register SRTX1 is a linear feedback shift register.

The receiver RX1 preferably comprises a clock recovery module CRM1, a first register SRRX11, a second register SRRX12 and a control module CM1. Preferably, the first register SRRX11 and the second register SRRX12 are linear feedback shift registers.

The first node N1 may comprise other components that are not shown in Figure 1 and that will not be described herein after, since they are not relevant to the present invention.

The transmitter TX1 is connected to the input of the line connection portion LC1. The output of the line connection portion LC1 is preferably connected to the receiver RX1. Within the receiver RX1, the output of the line connection portion is connected to the clock recovery module CRM1 whose output is in turn connected to the input of the first register SRRX11. The first register SRRX11 has one output connected to the second register SRRX12 and another one connected to the control module CM1. Also the output of the second register SRRX12 is connected to the control module CM1.

The line connection portion LC1 preferably comprises one or more connectors (not shown in the drawings) configured to engage with a number of transmission lines so as to connect the first node N1 to a second node N2. When more connectors are provided, they can be of the same type or of different types.

Preferably, the structure of the second node N2 is substantially the same as the structure of the first node N1 described above. A detailed description will therefore not be repeated. The components of the second node N2 will be referred to using the same reference signs of the corresponding components in the first node N1, in which the index "1" is replaced by the index "2" (transmitter TX2, line connection portion LC2, receiver RX2, first register SRRX21, second register SRRX22, and so on). Moreover, also the second node N2 preferably comprises a local clock (not shown in the drawings) generating a clock signal having a clock rate CR2. The clock rate of this local clock may be equal, for instance, to about 1 GHz.

In particular, the line connection portion LC1 of the first node N1 and the line connection portion LC2 of the second node N2 are preferably connected by means of a first transmission line TL1 and a second transmission line TL2. Preferably, the first transmission line TL1 and the second transmission line TL2 are optical fibers and the connectors comprised within the line connection portions LC1, LC2 are optical fiber connectors.

Preferably, the register SRTX1 of the transmitter TX1, the first register SRRX11 and the second register SRRX12 of the receiver RX1 are similar. In particular, they may be Fibonacci linear feedback shift registers or Galois linear feedback shift registers. Preferably, they are Fibonacci linear feedback shift registers.

Each register preferably comprises a number of storage elements $S_i$, i=1, ..., N, each of which stores a respective value $V_i$.

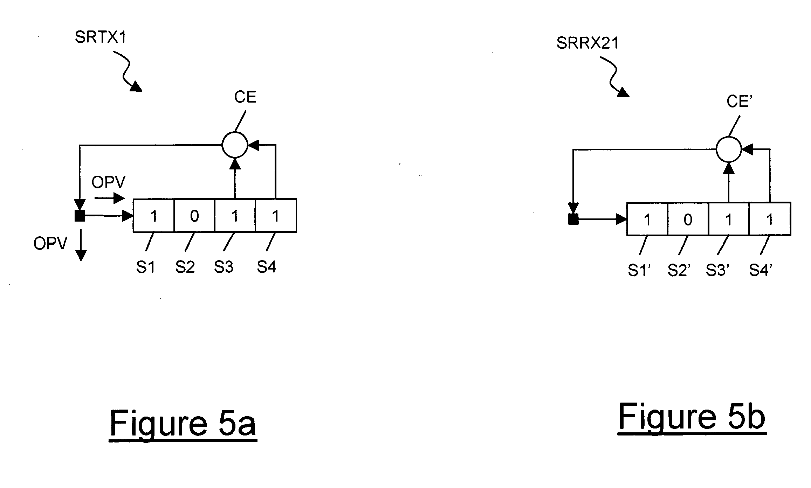

Figure 5a shows an exemplary register SRTX1 comprised within the transmitter TX1. The register SRTX1 of Figure 5a has four storage elements S1, S2, S3, S4, each of which storing a respective value V1, V2, V3, V4. Each value V1, V2, V3, V4 is a binary value, either a "0" or a "1". The set of values V1, V2, V3, V4 represents a state of the register SRTX1. The value V3, V4 of a number (for instance two in the exemplary register of Figure 5a) of storage elements S3, S4 are fed back to a combinatory element CE, which performs a linear combination of the values V3, V4 (via an XOR function) and determines an output value OPV of the register SRTX1.

The register SRTX1 changes its state at the clock pulses of the local clock of the first node N1, which are generated at the clock rate CR1. At each clock pulse the values V1, V2, V3 of the storage elements S1, S2, S3 are shifted to the storage elements S2, S3, S4, respectively. At the same clock pulse the output value OPV is fed into the storage element S1, while the value V4 of the storage element S4 is dropped.

The register SRTX1 is configured to change its state at the clock rate CR1 according to a predefined sequence of states referred to as a cycle. The cycle comprises $2^N-1$ possible states. During normal operation, after one cycle the register returns to the first state of the cycle and continues repeating the same sequence of states.

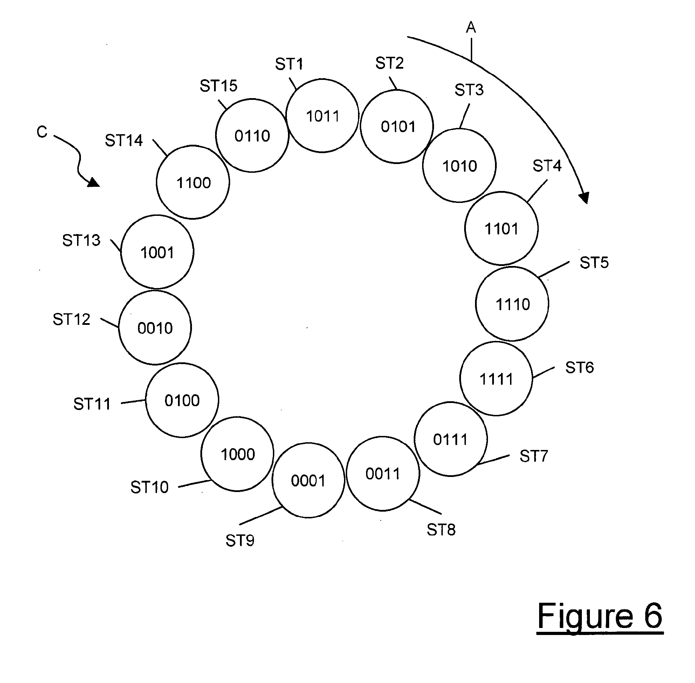

Figure 6 shows a state diagram of the register SRTX1 of Figure 5a. The state diagram shows a cycle C of states ST1, ST2, ST3, ..., ST15 of the register SRTX1 shown in Figure 5. During each cycle C, the register SRTX1 generates a data sequence DS of $2^N-1$ output values. For the register SRTX1 shown in Figure 5a, when it cycles through the 15 states ST1, ...., ST15 shown in Figure 6 in the direction indicated by the arrow "A", it generates the following data sequence DS of output values OPV1, ...., OPV15:

DS=011110001001101

(where first bit on the left is the fist generated output value and last bit on the right is the last generated output value).

Also in the second node N2, preferably, the register SRTX2 of the transmitter TX2, the first register SRRX21 and the second register SRRX22 of the receiver RX2 are similar and similar to the registers of the first node N1. It will be assumed herein after that the registers within the first node N1 and the second node N2 are of a same length N and are Maximum Length Fibonacci linear feedback shift registers.

Figure 5b shows an exemplary register SRRX21 comprised within the receiver RX2 of the second node N2. The register SRRX21 has four storage elements S1', S2', S3', S4', each of which storing a respective value V1', V2', V3', V4'. A combinatory element CE' performs a linear combination of the values V3' and V4' (via an XOR function) of the storage elements S3'and S4'.'

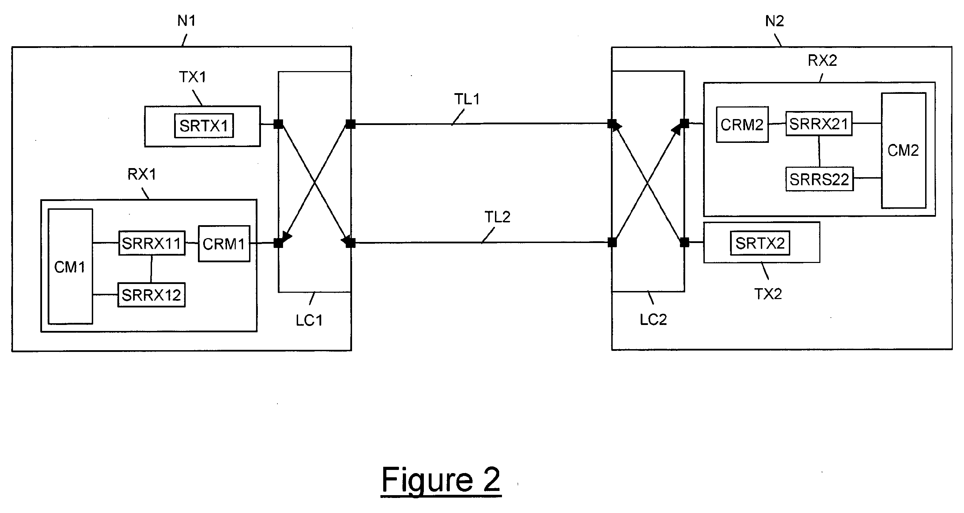

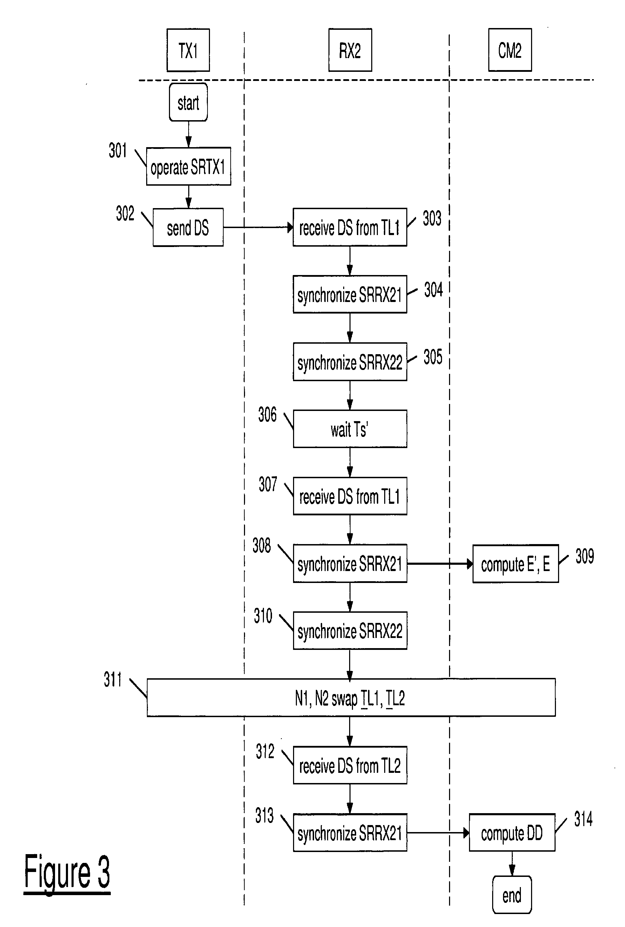

The method for computing the difference between the propagation delays along the first and the second transmission lines TL1, TL2 according to a preferred embodiment of the present invention will now be described in detail, with reference to the flow chart of Figure 3 and to Figures 1 and 2 and Figures 4a-4g. In particular, in the following, the method for computing the propagation delay along the first and the second transmission lines TL1, TL2 at the second node N2 will be described. Indeed, the propagation delay along the first and the second transmission lines TL1, TL2 may be alternatively computed at the first node N1 in a substantially similar way.

Firstly, it is assumed that, as shown in Figure 1, the line connection portion LC1 of the first node N1 and the line connection portion LC2 of the second node N2 are operated to connect the transmitter TX1 of the first node N1 to the receiver RX2 of the second node by means of the first transmission line TL1, and to connect the transmitter TX2 of the second node N2 to the receiver RX1 of the first node N1 by means of the second transmission line TL2.

A maximum swap time TSM indicative of a maximum time needed to swap the first transmission line TL1 1 and the second transmission line TL2 is determined on the basis of one or more of the following information:

- the type of devices used to perform the swap inside the line connection portions LC1 and LC2 (i.e. magneto-optic devices, MEMS, opto-mechanical devices and so on);
- the type of control adopted to synchronize the swap at the two nodes N1 and N2 (i.e. local automatic control, centralized control and so on);
- the time for re-aligning data transmitted on the first transmission line TL1 and the second transmission line TL2.

This maximum swap time TSM may be stored in the first node N1 and in the second node N2. The maximum swap time TSM may be, for example, equal to 100 ms.

Moreover, the length N of the registers within the first node N1 and the second node N2 is preferably determined so that the period of repetition of the cycles C (which is substantially equal to $2^N$-1 clock pulses) is greater than or equal to twice the sum of the absolute value of a maximum difference in the delays of the first transmission line TL1 and the second transmission line TL2 and a maximum offset, as it will be explained in greater detail herein after. The expression "maximum offset" will indicate, in the following description and in the claims, a maximum time offset or phase shift between the clock pulses of the local clock of the first node N1 and corresponding clock pulses of the local clock of the second node N2, such phase shift being accumulated during a time interval substantially equal to the maximum swap time.

During an initialization step, not shown in the flow chart of Figure 3, the first node N1 and the second node N2 preferably set up the procedure for computing the difference between the propagation delays of the first and second transmission line TL1, TL2 according to the method of the present invention. In particular, for setting up the procedure, a network operator may input a suitable command into the first node N1 or into the second node N2. Alternatively, the procedure may start automatically when the first node N1 and the second node N2 are started up, before any data transmission between them takes place.

Moreover, during the initialization step, the register SRTX1 comprised within the transmitter TX1 of the first node N1 is initialized with an initial state STin. It is assumed herein after that the values Vi of the storage elements Si, i=1, ..., N at the initial state STin are unequal to "0000" for avoiding a deadlock state. In the example considered in Figures 5a and 6, the state STin is equal to the first state ST1 and the values V1, V2, V3, V4 are equal to "1011 ".

After the initialization step, at step 301, the transmitter TX1 preferably operates the register SRTX1 so that the register SRTX1 starts cycling though its states (starting from the initial state STin) repeatedly, thus generating, after each cycle C, a data sequence DS of $2^N$-1 output values as described above. In particular, at each clock pulse of the local clock of the first node N1, the register SRTX1 changes state and generate an output value OPV. Therefore, after each cycle C of $2^N$-1 clock pulses, the register SRTX1 has generated one data sequence DS of output values OPV.

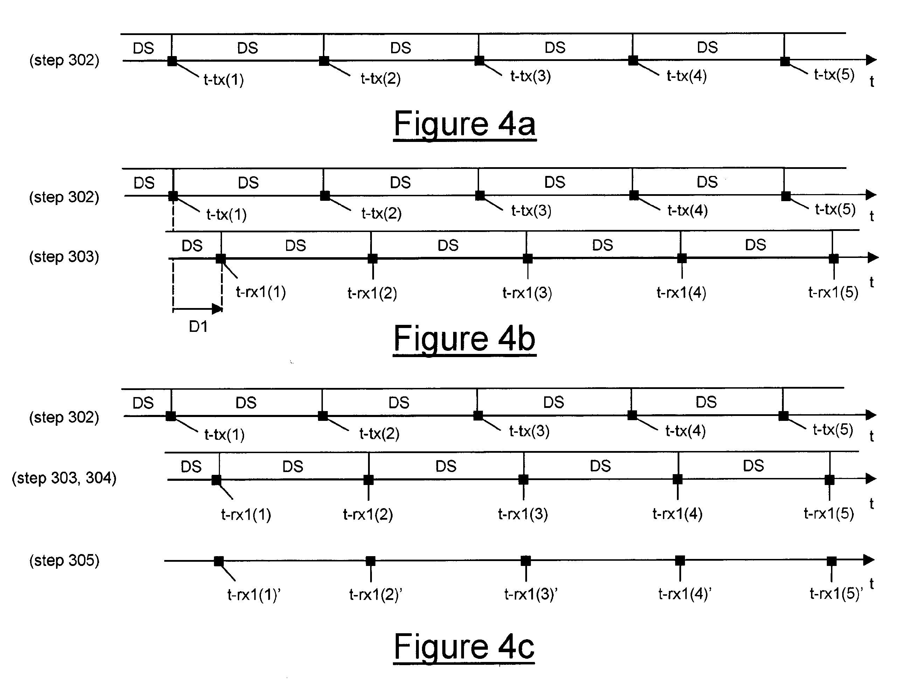

At step 302, the transmitter TX1 starts sending the sequences DS generated by the register SRTX1 along the first transmission line TL1. In particular, upon generation of each data sequence DS by the register SRTX1, the transmitter TX1 sends it along the first transmission line TL1. As shown in Figure 4a, the transmitter TX1 sends the sequences DS along the first transmission line TL1 at time instants t-tx(j), j=1, 2, 3, 4, 5, ..., which are uniformly spaced along the time axis. In particular, the spacing between two successive time instants t-tx(j) is substantially equal to $2^N$-1 clock pulses of the local clock of the first node N1. The time instants t-tx(j) may be the instants at which the last bit of each data sequence DS is sent over the first transmission line TL1.

At step 303, the receiver RX2 of the second node N2 starts receiving the sequences DS. In Figure 4b, the time instants at which the data of the sequences DS are received at the receiver RX2 are indicated as t-rx1(j). For example, the time instants t-rx1(j) may be the instants at which the last bit of each data sequence DS is received. As represented in Figure 4b, each time instant t-rx1(j) at which a data sequence DS is received at the receiver RX2 is delayed by a first propagation delay D1 with respect to the time instant t-tx(j) at which the same data sequence DS has been transmitted by the transmitter TX1. The first propagation delay D1 is the time taken by the data sequence DS to travel along the first transmission line TL1 from the first node N1 to the second node N2.

The data sequences DS are then forwarded to the clock recovery module CRM2 which recovers from them the clock signal at the clock rate CR1 of the first node N1. The clock recovery module CRM2 preferably forwards the data sequences DS and the recovered signal at the clock rate CR1 to the first register SRRX21.

Upon reception of the first data sequence DS transmitted by the transmitter TX1, at time t-rx1(1) of Figure 4b, the receiver RX2 preferably process the recovered clock signal and synchronizes the first register SRRX21 to the received data sequence DS so that it cycles through its states in the substantially same way as the register SRTX1. In order to do so, the last N values of the data sequence DS received at t-rx1(1) are preferably written within the storage elements of the first register SRRX21, as it will be described in greater detail herein after.

The operation of synchronizing the first register SRRX21 of the receiver RX2 will be described in the following, with reference, for sake of simplicity, to the exemplary registers SRTX1 and SRRX21 of Figures 5a and 5b and to the cycle C illustrated in Figure 6. According to this exemplary situation, in which it is assumed that the registers SRTX1 and SRRX21 have length N=4 and that STin=ST1, the last four bits of data sequence DS are "1011" (the last received bit is "1", the second last is "0" and so on). When the first register SRRX21 receives the fourth last bit "1" of data sequence DS, it writes it into the first storage element S1' of the first register SRRX21. Then, the first register SRRX21 changes its state at the clock rate CR1 of node N1 recovered by the clock recovery module CRM2. In particular, at the first clock pulse afterwards, the value "1" written in the first storage element S1' shifts to the second storage element S2'; in the meanwhile the receiver RX2 receives the third last bit "1" and writes it into the first storage element S1'. Therefore, after four clock pulses, the first register SRRX21 contains, in the first storage element S1' the last received bit "1", in the second storage element S2' the second last received bit "0", in the third storage element S3' the third last received bit "1" and in the fourth storage element S4' the fourth last received bit "1". At the fifth clock pulse, the first register SRRX21 changes state and goes to state ST1. Therefore, at the end of the synchronization, after four clock pulses, the first register SRRX21 is made to operate in the same way as the register SRTX1.

In other words, during this synchronization phase, the first register SRRX21 of Figure 5b works in an open loop mode, which means that the feedback lines from the combinatory element CE' to the first storage element S1', is open, such that the value outputted from the element CE' is not longer propagated to the storage element S1'. At the end of this mode, the register SRRX21 has been filled-up and the feedback line from the element CE' to the first storage element S1' is closed, such that the value outputted from the element CE' is propagated to the storage element S1'.

The first register SRRX21 performs a complete cycle C through its states each time a sequence DS is received from the transmitter TX1. In other words, at the first register SRRX21, the reception of each data sequence DS triggers a respective cycle C. The repetition of the cycles C at the first register is then synchronized to the repetition of the cycles C at the register SRTX1 of the transmitter TX1. Then, the first register SRRX21 cycles through the entire set of states ST1, ..., ST15 in a time interval substantially equal to $2^N$-1 clock pulses of the local clock of the first node N1 (step 304).

The time instants at which the first register SRRX21 repeats cycling are then substantially aligned to the time instants at which the receiver RX2 receives the sequences DS and both are indicated as t-rx1(j). They are uniformly spaced and the distance in time between each time instant r-rx1 (j) and the corresponding time instant t-tx(j) is substantially equal to the delay D1. In other words, the time instants at which the register SRTX1 of the transmitter TX1 and the first register SRRX21 of receiver RX2 cross a same state are constantly delayed by the first delay D1.

Moreover, the receiver RX2 preferably synchronizes also the second register SRRX22. In order to do so, the second register SRRX22 preferably reads the state of the first register SRRX21 by means, for example, of a latch circuit interposed between the first register SRRX21 and the second register SRRX22 (not shown in the drawings). This way, the second register SRRX22 starts cycling through the same states as the first register SRRX21. Once started, the second register SRRX22 changes its state at a rate substantially equal to the clock rate CR2 of the local clock of the second node N2. Therefore, the time interval between successive cycles C at the second register SRRX22 is substantially equal to $2^N$-1 clock pulses of the local clock of the second node N2 (step 305).

In Figure 4c, the time instants at which the second register SRRX22 repeats cycling are then substantially aligned to the time instants t-rx1(j) and are indicated as t-rx1(j)'. They are uniformly spaced and the distance in time between each instant r-rx1(j)' and the corresponding time instant t-tx(j) is substantially equal to the delay D1. In other words, the instants of time at which the register SRTX1 of the transmitter TX1 and the second register SRRX22 of the receiver RX2 cross a same state are delayed by the first delay D1.

It is assumed herein after that the local clock of the first node N1 and the local clock of the second node N2 are plesiochronous. Therefore, the clock rate CR1 is not equal to the clock rate CR2 and, as time passes, a phase shift or time offset between the clock pulses of the local clocks of the first and second nodes N1, N2 arises. It is further assumed that the difference between the clock rates CR1, CR2 of the local clocks is substantially constant in time, at least for the time required to perform the method according to the present invention.

At step 306 of the method of the present invention, the receiver RX2 preferably stops receiving the data sequences DS from the transmitter TX1 along the first transmission line TL1. Then, the receiver RX2 waits for a time interval TS' and monitors the first register SRRX21 and the second register SRRX22. The time interval TS' is preferably determined as a fraction FTS of the maximum swap time TSM, as it will be explained in greater detail herein after. Preferably, the time interval TS' is comprised within about 1/10 and about 1/2 of the maximum swap time TSM. The time interval TS' may be for instance 1/5 of the maximum swap time TSM.

Alternatively, during the time interval TS' the receiver RX2 may also continue receiving the data sequences DS from the transmitter TX1.

During the time interval TS', the second register SRRX22 preferably continues cycling though its states with a rate substantially equal to the clock rate CR2 of the local clock of the second node N2. Since the local clock of node N2 and the local clock of the first node N1 are plesiochronous, after the time interval TS' the distance between the time instants t-rx1(j)' and the corresponding time instants t-tx(j) is no longer equal to the delay D1. In other words, the time instants at which the register SRTX1 and the second register SRRX22 cross a same state are no longer separated by the first delay D1.

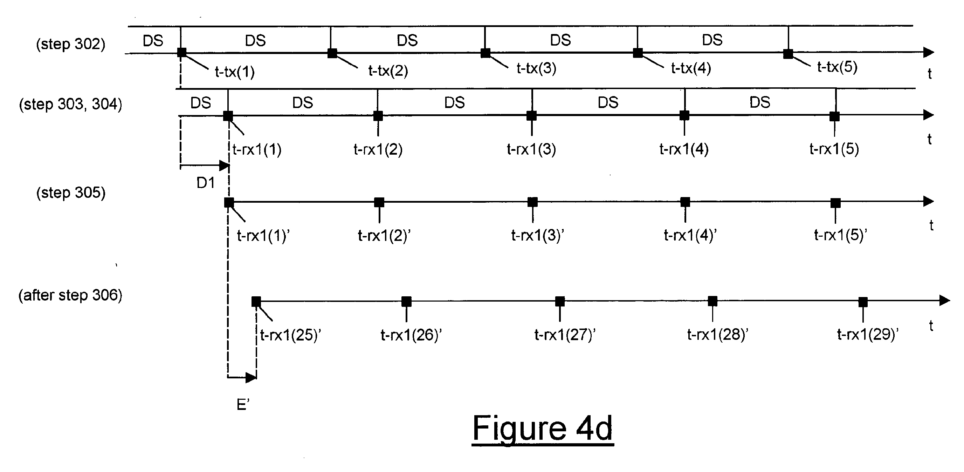

This situation is represented in Figure 4d, in which it is assumed, for sake of example, that during the time interval TS' the second register SRRX22 performed 20 cycles C. After the time interval TS' elapsed, the distance in time between the time instants t-rx1(j)' and the corresponding time instants t-tx(j) is equal to D1+E', where E' is a time offset due to the fact that the local clocks of the first node N1 and of the second node N2 are plesiochronous and therefore a phase shift between the clock pulses of the two clocks arises during the time interval TS'. It is assumed that the time offset E' is lower than the maximum offset mentioned above.

It is to be noted that the time offset E' has a sign which depends on the difference between the clock rates CR1 and CR2. In particular, the time offset E' is positive if the clock rate CR1 of the local clock of the first node N1 is greater than the clock rate CR2 of the local clock of the second node N2. In other words, the time offset E' is positive if, after the time interval TS' elapsed, the clock pulses at t-rx1(j)' are delayed with respect to the clock pulses at t-tx(j). In Figures 4d-4g it is assumed that, for sake of non limiting example, the clock rate CR1 of the local clock of the first node N1 is greater than the clock rate CR2 of the local clock of the second node N2 and therefore, after the time interval TS' elapsed, the clock pulses at t-rx1(j)' are delayed with respect to the clock pulses at t-tx(j) and the time offset E' is positive.

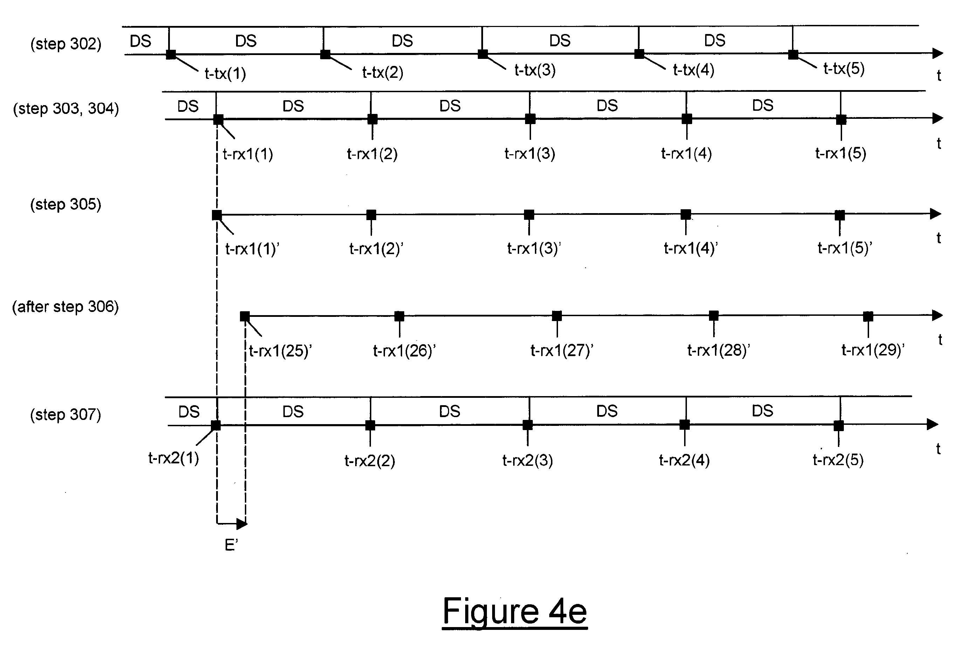

At step 307, the receiver RX2 preferably starts receiving again the sequences DS from the transmitter TX1. The time instants at which the receiver RX2 receives again the sequences DS are indicated as t-rx2(j) in Figure 4e. The data sequences are then forwarded to the clock recovery module CRM2 which recovers the clock signal at the clock rate CR1 of the first node N1. The clock recovery module CRM2 preferably forwards the data sequences DS and the recovered clock signal at the clock rate CR1 to the first register SRRX21.

At step 308, upon reception of the first data sequence DS after the time interval TS', at time t-rx2(1), the receiver RX2 preferably synchronizes the first register SRRX21 to the received data sequence DS, as already described above. Therefore, after few clock pulses, the first register SRRX21 preferably cycles again through the states in the same way as the register SRTX1 of the transmitter TX1 at the clock rate CR1 of the local clock of the first node N1. At the first register SRRX21, the repetition of the cycles C is synchronized to the repetition of the cycles C at the register SRTX1 of the transmitter TX1. In particular, the instants of time at which the register SRTX1 and the first register SRRX21 cross a same state are delayed by the first delay D1. It is to be noted that the steps 307 and 308 are unnecessary if during the time interval TS' the receiver RX2 continued receiving the data sequences DS from the transmitter TX1.

At step 309, the control module CM2 preferably compares the current state of the second register SRRX22 and the current state of the first register SRRX21. The difference between such states is indicative of the time offset E'. Indeed, the current state of the first register SRRX21 is delayed with respect to the corresponding state of the register SRTX1 by D1, while the current state of the second register SRRX22 is shifted with respect to the corresponding state of the register SRTX1 by D1+E' (wherein, as mentioned above, the time offset E' may be positive or negative).

The control module CM2 then preferably determines the number of states NST1 by which the current state of the second register SRRX22 and the current state of the first register SRRX21 differ. The control module CM2 preferably computes the absolute value of the time offset E' by means of the following equation:

$$|E'| = NST1 \times 1/CR2 \qquad\qquad [2]$$

where NST1 is the number of states by which the current state of the second register SRRX22 and the current state of the first register SRRX21 differ and CR2 is the clock rate of the local clock of the second node N2. Moreover, preferably, the control module CM2 determines the sign of the time offset E'. If the current state of the second register SRRX22 is behind of the current state of the first register SRRX21, the control module CM2 preferably determines that the time offset E' is positive. If the current state of the second register SRRX22 is ahead of the current state of the first register SRRX21, the control module CM2 preferably determines that the time offset E' is negative.

For example, with reference to the cycle C of Figure 6, it is assumed that when at step 309 the control module CM2 computes the difference between the current state of the second register SRRX22 and the current state of the first register SRRX21, the second register SRRX22 is in state ST15 and the first register SRRX21 is in state ST2. Then, the control module CM2 determines that the second register SRRX22 is two states behind of the first register SRRX21 and that the time offset E' is positive. As mentioned above, the period of repetition of cycles C is greater than twice the maximum offset and therefore, advantageously, no ambiguity arises in determining the number NST1 of states by which the second register SRRX22 and the first register SRRX21 differ and the sign of the time offset E' (i.e. the control module CM2 automatically discard the possibility that the second register SRRX22 might be thirteen states ahead of the first register SRR).

Then, the control module CM2 preferably computes a swap time offset E indicative of the distance in time between the time instants t-rx1(j)' and the corresponding time instants t-tx(j) which would accumulate during the maximum swap time TSM. The control module CM2 preferably computes the swap time offset E by applying the following equation:

$$E = E' \times 1/FTS. \qquad\qquad [3]$$

For instance, if the maximum swap time TSM is equal to 100 ms and TS'=1/5xTSM=20 ms, then E= E' x 5.

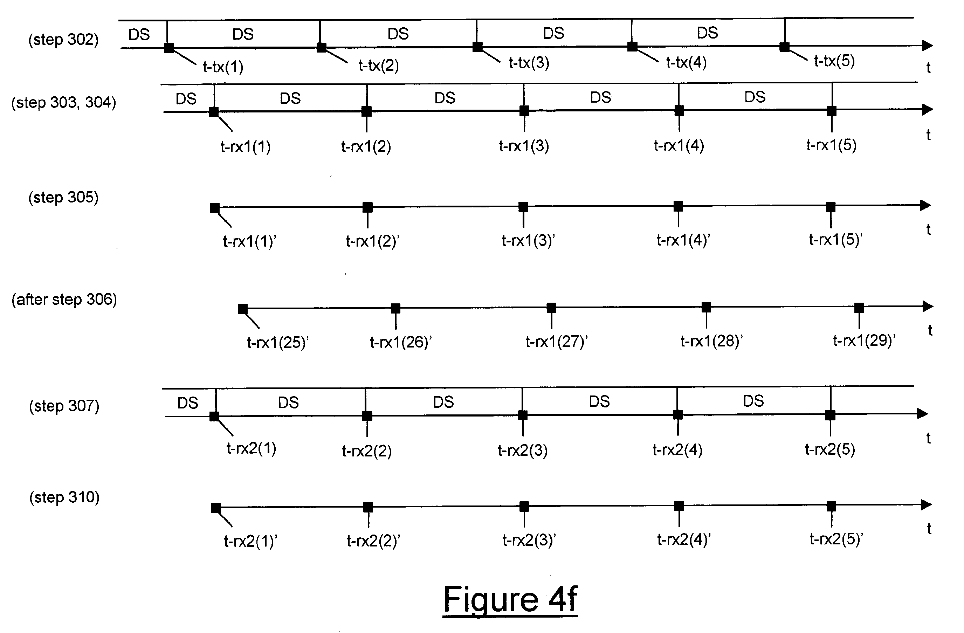

At step 310, the receiver RX2 preferably synchronizes also the second register SRRX22, as already described above. Therefore, after few clock pulses, the second register SRRX22 preferably restart cycling through the states in the same way as the first register SRRX21 at a rate substantially equal to the clock rate CR2 of the local clock of the second node N2. In Figure 4f, the time instants at which the second register SRRX22 repeats cycling are then substantially aligned to the time instants t-rx2(j) at which the receiver RX2 receives the data sequences DS from the transmitter TX1 and are indicated as t-rx2(j)'.

At step 311, the line connection portion LC1 of the first node N1 and the line connection portion LC2 of the second node N2 are preferably operated to swap the first transmission line TL1 and the second transmission line TL2, i.e. to connect the transmitter TX1 of the first node N1 to the receiver RX2 of the second node by means of the second transmission line TL2, and to connect the transmitter TX2 of the second node N2 to the receiver RX1 of the first node N1 by means of the first transmission line TL1.

The operation of swapping the first transmission line TL1 and the second transmission line TL2 takes a time substantially equal to an actual swap time TS. During the actual swap time TS, the receiver RX2 stops receiving the sequences DS from the transmitter TX1. Besides at step 311, after the actual swap time TS elapsed, the receiver RX2 preferably waits for a further interval of time until the maximum swap time TSM elapsed. During the maximum swap time TSM, the second register SRRX22 of the receiver RX2 preferably continues to repeatedly cycle through its states with a period of repetition of the cycles C substantially equal to $2^N$-1 clock pulses of the local clock of the second node N2. Since the local clock of the second node N2 and the local clock of the first node N1 are plesiochronous, the distance between the time instants t-rx2(j)' and the corresponding time instants t-tx(j) is no longer equal to the delay D1. In other words, the time instants at which the register SRTX1 and the second register SRRX22 cross a same state are no longer separated by the first delay D1.

Alternatively, the actual swap time TS may be measured and stored in the first node N1 and in the second node N2. In this case, at step 311 the receiver RX2 may not wait until the maximum swap time TSM is elapsed but it may stop receiving the sequences DS just for the actual swap time TS. In this case, at step 306, the time interval TS' may be a fraction FTS of the actual swap time TS. The time interval TS' may also be substantially equal to the actual swap time TS.

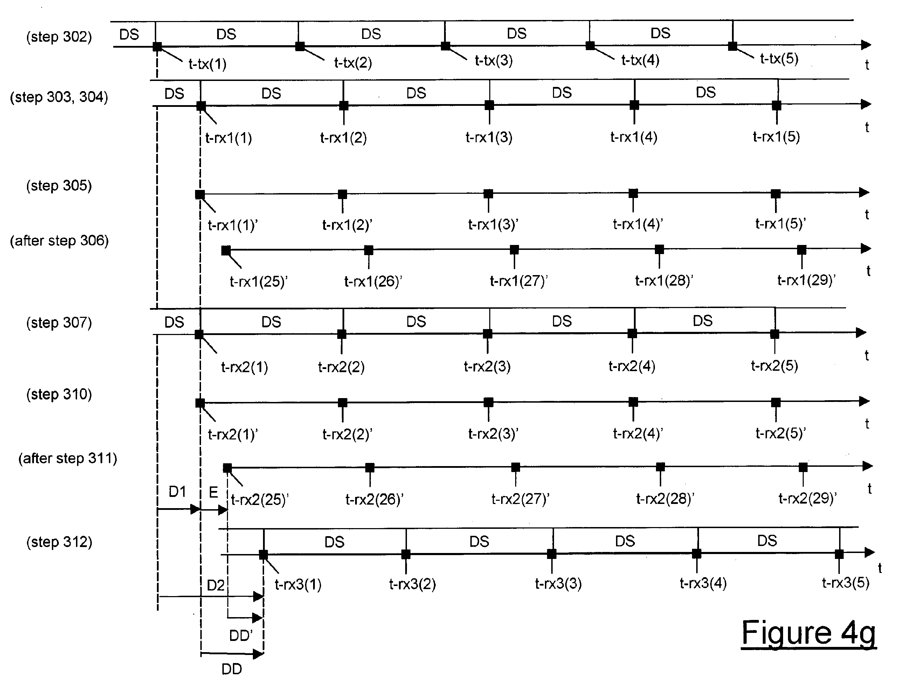

As represented in Figure 4g, it is assumed, for sake of simplicity, that TS'=TS and that during the time interval TS the second register SRRX22 performed 20 cycles C. After the time interval TS elapsed, the distance in time between the time instants t-rx2(j)' and the corresponding time instants t-tx(j) is equal to D1+E (indeed, as mentioned above, the difference between the clock rates of the local clocks of the first node N1 and the second node N2 is assumed to be substantially constant in time).

At step 312, the receiver RX2 preferably starts receiving the sequences DS from the transmitter TX1 along the second transmission line TL2. The time instants at which the receiver RX2 receives the sequences DS along the second transmission line TL2 are indicated as t-rx3(j) in Figure 4g. The data sequences are then forwarded to the clock recovery module CRM2 which recovers the clock signal at the clock rate CR1 of the first node N1. The clock recovery module CRM2 preferably forwards the data sequences DS and the recovered clock signal at the clock rate CR1 to the first register SRRX21. At step 313, upon reception of the first data sequence DS, at time t-rx3(1), the receiver RX2 preferably process the recovered clock signal and synchronizes the first register SRRX21, as already described above. Therefore, after few clock pulses, the first register SRRX21 preferably cycles through its states in substantially the same way as the register SRTX1 of the transmitter TX1 at a rate substantially equal to the clock rate CR1 of the local clock of the first node N1. At the first register SRRX21, the repetition of the cycles C is synchronized to the repetition of the cycles C at the register SRTX1 of the transmitter TX1. In particular, the time instants at which the register SRTX1 and the first register SRRX21 cross a same state are delayed by a second delay D2, which represents the time taken by the data of the data sequence DS to travel along the second transmission line TL2.

At step 314, the control module CM2 preferably compares the current state of the first register SRRX21 and the current state of the second register SRRX22. The difference between such states is indicative of a delay difference DD' between the first delay D1, affected by the swap time offset E, and the second delay D2. Indeed, the current state of the first register SRRX21 is delayed with respect to the corresponding state of the register SRTX1 by the second delay D2, while the current state of the second register SRRX22 is shifted with respect to the corresponding state of the register SRTX1 by D1+E (wherein, as mentioned above, the swap time offset E may be positive or negative).

The control module CM2 then preferably determines the number of states NST2 by which the current state of the first register SRRX21 and the current state of the second register SRRX22 differ. The control module CM2 preferably computes the delay difference DD'. In particular, it computes the absolute value of the delay difference DD' by means of the following equation:

$$|DD'| = NST2 \times 1/CR2 \qquad\qquad [4]$$

wherein NST2 is the number of states by which the current state of the first register SRRX21 and the current state of the second register SRRX22 differ and CR2 is the clock rate of the local clock of the second node N2.

Moreover, preferably, the control module CM2 determines the sign of the delay difference DD'. If the current state of the first register SRRX21 is behind of the current state of the second register SRRX22, the control module CM2 preferably determines that the delay difference DD' is positive. If the current state of the first register SRRX21 is ahead of the current state of the second register SRRX22, the control module CM2 preferably determines that the delay difference DD' is negative.

For example, with reference to the cycle C of Figure 6, it is assumed that when at step 314 the control module CM2 computes the difference between the current state of the first register SRRX21 and the current state of the second register SRRX22, the first register SRRX21 is in state ST4 and the second register SRRX22 is in state ST9. Then, the control module CM2 determines that the first register SRRX21 is five states behind of the second register SRRX22 and that the delay difference DD' is positive. As mentioned above, the period of repetition of cycles C is greater than twice the maximum delay difference and therefore, advantageously, no ambiguity arises in determining the number NST2 of states by which the first register SRRX21 and the second register SRRX22 differ and the sign of the delay difference DD' (i.e. the control module CM2 automatically discard the possibility that the first register SRRX21 might be nine states ahead of the second register SRRX22).

It is to be noted that the delay difference DD' is not indicative of the true difference between the second delay D2 and the first delay D1 due to the presence of the swap time offset E (see Figure 4g).

Then, the control module computes a correct delay difference DD as the sum of the delay difference DD' and the swap time offset E by means of the following equation:

$$DD = DD' + E \qquad\qquad [5]$$

The resulting sign of the correct delay difference DD is indicative of which of the transmission lines TL1, TL2 causes a greater transmission delay. Indeed, if the correct delay difference DD is positive (e.g. when the swap time offset E is positive and the delay difference DD' is positive), the second transmission line TL2 causes a greater transmission delay, while if the correct delay difference DD is negative (e.g. when the swap time offset E is negative and the delay difference DD' is positive but its absolute value is lower than the absolute value of the swap time offset E), the first transmission line TL1 causes a greater transmission delay.

It follows from the above that, since the period of repetition of the cycles C (which is equal to $2^N-1$ clock pulses) at registers SRRX21, SRRX22 is at least twice the sum of the maximum delay difference between the first transmission line TL1 and the second transmission line TL2 and the maximum offset, it is possible to know without ambiguity which of the first transmission line TL1 and the second transmission line TL2 causes a greater transmission delay.

The maximum delay difference may be determined on the basis of typical values for the maximum length difference between two optical fibers connecting two nodes. Considering a typical maximum length difference of about 1 km and that the time for the light propagation along 1 km of fiber is approximately equal to 5 microseconds, the maximum delay difference may be equal about 5 microseconds.

The maximum offset may be determined on the basis of typical values for the phase shift between the two local clocks, according to typical clock accuracies. Considering a clock accuracy of 100 ppm, a typical phase shift between the two local clocks may be equal to about 100 microseconds per second. Therefore, if during step 311 a maximum swap time TSM=100 ms elapsed, the maximum offset is equal to about 20 microseconds.

Therefore, by determining a period of repetition of the cycles C greater than twice the sum of the maximum delay difference and the maximum offset, the length N of the registers SRTX1, SRRX21, SRRX22 may be determined.

Assuming a clock rate of 1 GHz, the period of repetition of the cycles C is substantially equal to $2^N$-1 ns. Then, assuming that the maximum delay difference that can be computed is equal to 5 microseconds and that the maximum error is equal to 20 microseconds, it turns out that N must be at least equal to 16.

The method according to the present invention may be applied also in a situation in which the period of repetition of the cycles C is not determined so as to be greater than twice the sum of the maximum delay difference and the maximum offset. In this case, at the receiver RX2, when the first register SRRX21 and the second register SRRX22 cycle through their states, the number of complete cycles C performed by each register is counted. This way, at steps 309 and 314, it can be determined whether the first register SRRX21 is in a state behind of the state of the second register SRRX22 or whether the first register SRRX21 is in a state ahead of the state of the second register SRRX22 by comparing the number of complete cycles C performed by each register.

In other words, there may be a situation in which the period of repetition of the cycles C is not determined so as to be greater than twice the sum of the maximum delay difference and the maximum offset but only of the maximum delay difference. This can be done under the assumption that step 308 is not necessary since the register SRRX21 is kept aligned to the register SRTX1 during the interval TS'. In this hypothesis, at step 309, it is computed the difference between the registers SRRX21 and SRRX22 as the difference of states of these registers plus the number of times that the registers' SRRX21 and SRRX22 states slip of more than half of a counting cycle C during the interval TS'. This allows recovering an error due to a clock drift larger than half of the counting cycle C. The operation in steps 314 are not affected by this if the operations are performed in a manner using a modulus $2^N$-1 operation.

According to alternative embodiments, the first register SRRX21 and the second register SRRX22 at the second node N2 may synchronize to the received data sequences DS by means of an asynchronous FIFO ("First In First OUT") queue. In particular, an asynchronous FIFO queue may be interposed between the clock recovery module CRM2 and the first and second registers SRRX21, SRRX22, which are both connected to the queue.

In the following, an exemplary determination of the time interval TS' will be described. As mentioned before, the time interval TS' may be equal to a fraction of the maximum swap time TSM. At step 309, the computation of the time offset E' during TS' is affected by an intrinsic error IE which is equal to 1 clock period (indeed, the computation of E' is performed by comparing the current states of the first register SRRX21 and the second register SRRX22 which change state at the clock rate CR1 and CR2, respectively). Then, the error affecting the computation of the swap time offset E is obtained by multiplying the intrinsic error IE by the ratio TSM/TS'. The time interval TS' is determined by imposing that the error affecting the computation of the swap time offset E be lower than or equal to a tolerable error TE, so that

$$TS' >= TSM/(TE/IE). \qquad [6]$$

For example, by assuming that TSM=100 ms, IE=1 ns and TE=8 ns, it turns out that TS'>= 12.5 ms and therefore TS' >= TSM/8.

Advantageously, the method of the present invention allows computing the difference between the delays of the first transmission line TL1 and the second transmission line TL2 in an automatic, simple and accurate manner.

Moreover, the method of the present invention advantageously allows computing the difference between the delays of the transmission lines even when the local clocks of the two nodes are not synchronous. Indeed, the method provides for firstly computing the error between the two local clocks and then for using the error for correcting the computed delay difference.

Thanks to this advantageous feature, the method of the present invention may be used within plesiochronous or asynchronous networks, for instance in Ethernet networks.

Besides, there is no need to speed up the time taken to swap the fibers in order to minimize the error due to plesiochronous clocks. Therefore, the method advantageously allows using slow and cheap devices for swapping the fibers (for instance, mechanical-based devices instead of MEMS-based or magneto-optical-based devices, which are faster but more expensive).

According to an alternative embodiment of the present invention, the transmitter TX1 of the first node N1 comprises, instead of the register SRTX1, a data unit generator which may be, for example, a frame generator. The frame may be an SDH ("Synchronous Data Hierarchy") or an OTH ("Optical Transmission Hierarchy") frame. In this case, the transmitter TX1 preferably repeatedly generates and transmits a sequence of frames or a multi-frame firstly along the first transmission line TL1, instead of the sequence DS described above. Each multi-frame may carry identifiers which identify consecutive blocks of data within each multi-frame transmitted by the transmitter TX1. At receiver RX2, a counter counts the received blocks of data within the multi-frame by identifying the position of the identifiers. In this case, the value of the counter represents a state of the counter. The method described above may be applied in this situation by comparing, at steps 309 and 314, the value of the counter with the value of the identifier of the currently received data block.

This alternative embodiment is particularly advantageous when the method is implemented within an SDH or an OTH network since the nodes of such type of network are already provided with frame generators. Therefore, the implementation of the method according to such an alternative embodiment is simple and cheap as it does not require providing the nodes with additional devices.

The functions of the various elements shown in Figures 1, 2, 5a and 5b may be provided through the use of dedicated software, dedicated hardware, as well as hardware capable of executing software in association with appropriate software. The functions of the various elements may be provided by a single dedicated processor, by a single shared processor or by a plurality of individual processors, some of which may be shared. Moreover, the elements may comprise, without limitation, a digital signal processor (DSP) hardware, a network processor, an application specific integrated circuit (ASIC), a field programmable gate array (FPGA), a read-only memory (ROM) for storing software, a random access memory (RAM) and a non volatile storage. Other hardware, conventional and/or custom, may also be included.

It should be appreciated by those skilled in the art that any block diagrams herein, as those of Figures 1, 2, 5a and 5b, represent conceptual views of illustrative circuitry embodying the principles of the invention. Similarly, it will be appreciated that any flow charts, flow diagrams, state transition diagrams, pseudo code, and the like, as that of Figures 3 and 6, represent various processes which may be substantially represented in computer readable medium and so executed by a computer or processor, whether or not such computer or processor is explicitly shown.

**Claims**

1. A method for computing a difference (DD) between a first propagation delay (D1) of a first transmission line (TL1) and a second propagation delay (D2) of a second transmission line (TL2), wherein said first and second transmission lines connect a first node (N1) and a second node (N2) of an optical network, said method comprising, at said second node (N2):

   a) receiving first data (DS) from said first node (N1) along said first transmission line (TL1); **characterised by**, at said second node (N2):
   b) computing a time offset (E) between a first clock signal recovered from said first data (DS) and a second clock signal generated at said second node (N2);
   c) swapping said first transmission line (TL1) and said second transmission line (TL2);
   d) receiving second data (DS) from said first node (N1) along said second transmission line (TL2); and
   e) computing said difference (DD) on the basis of said first data (DS), said second data (DS) and said time offset (E).

2. The method according to claim 1, wherein said step b) further comprises providing a device (SRRX22) with a first sequence of states based on said first data (DS), wherein said first sequence of states is a periodic sequence of states, said device (SRRX22) changing its state at a rate correlated to a clock rate (CR2) of said second clock signal.

3. The method according to claim 2, wherein said step b) further comprises monitoring said first sequence for a time interval (TS') and, after said time interval (TS') elapsed, determining a state of said device (SRRX22) and computing said time offset (E) based on the determined state of said device (SRRX22) and said first data (DS).

4. The method according to claim 3, wherein said step e) further comprises

   - providing a further device (SRRX21) with a second sequence of states based on said second data (DS), wherein said second sequence of states is periodic, said further device (SRRX21) changing its state a rate correlated to a clock rate (CR1) of said first clock signal; and
   - determining a state of said device (SRRX22) and a state of said further device (SRRX21) and computing said difference (DD) based on the determined state of said device (SRRX22), the determined state of said further device (SRRX21) and said time offset (E).

5. The method according to claim 4, wherein said step b) further comprises

   - providing said further device (SRRX21) with said first sequence of states based on said first data (DS), said further device (SRRX21) changing its state at a rate correlated to a clock rate (CR1) of said first clock signal; and
   - after said time interval (TS') elapsed, determining a state of said device (SRRX22) and a state of said further device (SRRX21) and computing said time offset (E) based on the determined state of said device (SRRX22) and the determined state of said further device (SRRX21).

6. The method according to any of the preceding claims, wherein said first data (DS) and said second data (DS) comprise output values (OPV) of a linear feedback shift register (SRTX1).

7. The method according to claim 3, wherein at said step b) said time interval (TS') is a fraction of a maximum swap time (TSM) indicative of a maximum time needed to swap the first transmission line (TL1) and the second transmission line (TL2).

8. The method according to claim 1, wherein said first data (DS) and said second data (DS) comprise at least one multi-frame.

9. The method according to claim 4, wherein said step e) further comprises counting repetition periods of said fist sequence and said second sequence.

10. A node (N2) for an optical network said node (N2) being **characterised by** a receiver (RX2) configured to receive first data (DS) from a first transmission line (TL1), to swap said first transmission line (TL1) and a second transmission line (TL2) and to receive second data (DS) from said second transmission line (TL2), said node (N2) comprising a local clock with a clock rate (CR2), said receiver (RX2) comprising a control module (CM2) configured to:

    - compute a time offset (E) between a first clock signal recovered from said first data (DS) and a second clock signal generated by said local clock at said clock rate (CR2);
    - compute a difference (DD) between a first propagation delay (D1) of said first transmission line (TL1) and a second propagation delay (D2) of said second transmission line (TL2) on the basis of said first data (DS), said second data (DS) and said time offset (E).

11. The node (N2) according to claim 10, wherein said receiver (RX2) further comprises a device (SRRX22) cycling through a first sequence of states based on said first data (DS), said first sequence being periodic, said device (SRRX22) being configured to change its state at a rate correlated to said clock rate (CR2) of said second clock signal.

12. The node (N2) according to claim 11, wherein said control module (CM2) is further configured to monitor said first sequence for a time interval (TS') and, after said time interval (TS') elapsed, determine a state of said device (SRRX22) and compute said time offset (E) based on the determined state of said device (SRRX22) and said first data (DS).

13. The node (N2) according to claim 11, wherein said receiver (RX2) further comprises a further device (SRRX21) configured to cycle through a second sequence of states based on said second data (DS), said second sequence being periodic, said further device (SRRX21) being configured to change its state a rate correlated to a clock rate (CR1) of said first clock signal.

14. The node (N2) according to claim 13, wherein said device (SRRX22) and said further device (SRRX21) are linear feedback shift registers.

15. The node (N2) according to claim 14, wherein said device (SRRX22) and said further device (SRRX21) are Maximum Length Fibonacci linear feedback shift registers.

**Patentansprüche**

1. Verfahren zur Berechnung einer Differenz (DD) zwischen einer ersten Laufzeitverzögerung (D1) einer ersten Übertragungsleitung (TL1) und einer zweiten Laufzeitverzögerung (D2) einer zweiten Übertragungsleitung (TL2), wobei die besagte erste und die besagte zweite Übertragungsleitung einen ersten Knoten (N1) und einen zweiten Knoten (N2) eines optischen Netzwerks verbinden, wobei das besagte Verfahren an dem besagten zweiten Knoten (N2) umfasst:

a) Empfangen von ersten Daten (DS) von dem besagten ersten Knoten (N1) entlang der besagten ersten Übertragungsleitung (TL1);

gekennzeichnet, an dem besagten zweiten Knoten (N2), durch:

b) Berechnen eines zeitlichen Versatzes (E) zwischen einem aus den besagten ersten Daten (DS) rückgewonnenen ersten Taktsignal und einem an dem besagten zweiten Knoten (N2) erzeugten zweiten Taktsignal;
c) Austauschen der besagten ersten Übertragungsleitung (TL1) und der besagten zweiten Übertragungsleitung (TL2);
d) Empfangen von zweiten Daten (DS) von dem besagten ersten Knoten (N1) entlang der besagten zweiten Übertragungsleitung (TL2); und
e) Berechnen der besagten Differenz (DD) auf der Basis der besagten ersten Daten (DS), der besagten zweiten Daten (DS) und des besagten Zeitversatzes (E).

2. Verfahren nach Anspruch 1, wobei der besagte Schritt b) weiterhin das Ausstatten einer Vorrichtung (SRRX22) mit einer ersten Folge von Zuständen auf der Basis der besagten ersten Daten (DS) umfasst, wobei die besagte erste Folge von Zuständen eine periodische Folge von Zuständen ist, wobei die besagte Vorrichtung (SRRX22) ihren Zustand bei einer mit einer Taktrate (CR2) korrelierten Rate des besagten zweiten Taktsignals ändert.

3. Verfahren nach Anspruch 2, wobei der besagte Schritt b) weiterhin das Überwachen der besagten ersten Folge für ein Zeitintervall (TS'), und nach Ablauf des besagten Zeitintervalls (TS') das Ermitteln eines Zustands der besagten Vorrichtung (SRRX22) und das Berechnen des besagten zeitlichen Versatzes (E) auf der Basis des ermittelten Zustands der besagten Vorrichtung (SRRX22) und der besagten ersten Daten (DS) umfasst.

4. Verfahren nach Anspruch 3, wobei der besagte Schritt e) weiterhin umfasst:

- Ausstatten einer weiteren Vorrichtung (SRRX21) mit einer zweiten Folge von Zuständen auf der Basis der besagten zweiten Daten (DS), wobei die besagte zweite Folge von Zuständen periodisch ist, wobei die besagte weitere Vorrichtung (SRRX21) ihren Zustand bei einer mit einer Taktrate (CR1) des besagten ersten Taktsignals korrelierten Rate ändert; und
- Ermitteln eines Zustands der besagten Vorrichtung (SRRX22) und eines Zustands der besagten weiteren Vorrichtung (SRRX21), und Berechnen der besagten Differenz (DD) auf der Basis des ermittelten Zustands der besagten Vorrichtung (SRRX22), des ermittelten Zustands der besagten weiteren Vorrichtung (SRRX21) und des besagten zeitlichen Versatzes (E).

5. Verfahren nach Anspruch 4, wobei der besagte Schritt b) weiterhin umfasst:

- Ausstatten der besagten weiteren Vorrichtung (SRRX21) mit der besagten ersten Folge von Zuständen auf der Basis der besagten ersten Daten (DS), wobei die besagte weitere Vorrichtung (SRRX21) ihren Zustand bei einer mit einer Taktrate (CR1) des besagten ersten Taktsignals korrelierten Rate ändert; und
- nach Ablauf des besagten Zeitintervalls (TS'), Ermitteln eines Zustands der besagten Vorrichtung (SRRX22) und eines Zustands der besagten weiteren Vorrichtung (SRRX21), und Berechnen des besagten zeitlichen Versatzes (E) auf der Basis des ermittelten Zustands der besagten Vorrichtung (SRRX22) und des ermittelten Zustands der besagten weiteren Vorrichtung (SRRX21).

6. Verfahren nach einem beliebigen der vorstehenden Ansprüche, wobei die besagten ersten Daten (DS) und die besagten zweiten Daten (DS) Ausgangswerte (OPV) eines linear rückgekoppelten Schieberegisters (SRTX1) umfassen.

7. Verfahren nach Anspruch 3, wobei das Zeitintervall (TS') in dem besagten Schritt b) ein Bruchteil einer maximalen Austauschzeit (TSM) ist, welcher für eine für das Austauschen der ersten Übertragungsleitung (TL1) und der zweiten Übertragungsleitung (TL2) erforderliche Maximalzeit indikativ ist.

8. Verfahren nach Anspruch 1, wobei die besagten ersten Daten (DS) und die besagten zweiten Daten (DS) mindestens einen Multirahmen umfassen.

9. Verfahren nach Anspruch 4, wobei der besagte Schritt e) weiterhin das Zählen der Wiederholungsperioden der besagten ersten Folge und der besagten zweiten Folge umfasst,

10. Knoten (N2) für ein optisches Netzwerk, wobei der besagte Knoten (N2) durch einen Empfänger (RX2) gekennzeichnet ist, welcher dafür konfiguriert ist, erste Daten (DS) von einer ersten Übertragungsleitung (TL1) zu empfangen, die besagte erste Übertragungsleitung (TL1) und eine zweite Übertragungsleitung (TL2) auszutauschen und zweite Daten (DS) von der zweiten Übertragungsleitung (TL2) zu empfangen, wobei der besagte Knoten (N2) einen lokalen Taktgeber mit einer Taktrate (CR2) umfasst, wobei der besagte Empfänger (RX2) ein Steuermodul (CM2) umfasst, welches für Folgendes konfiguriert ist:

- Berechnen eines zeitlichen Versatzes (E) zwischen einem aus den besagten ersten Daten (DS) rückgewonnenen ersten Taktsignal und einem von dem besagten lokalen Taktgeber bei der besagten Taktrate (CR2) erzeugten zweiten Taktsignal;
- Berechnen einer Differenz (DD) zwischen einer ersten Laufzeitverzögerung (D1) einer ersten Übertragungsleitung (TL21) und einer zweiten Laufzeitverzögerung (D2) einer zweiten Übertragungsleitung (TL2) auf der Basis der besagten ersten Daten (DS), der besagten zweiten Daten (DS) und des besagten zeitlichen Versatzes (E).

11. Knoten (N2) nach Anspruch 10, wobei der besagte Empfänger (RX2) weiterhin eine Vorrichtung (SRRX22) umfasst, welche eine erste Folge von Zuständen auf der Basis der besagten ersten Daten (DS) zyklisch durchläuft, wobei die besagte erste Folge periodisch ist, wobei die besagte Vorrichtung (SRRX22) für das Ändern ihres Zustands bei einer mit der besagten Taktrate (CR2) des besagten zweiten Taktsignals korrelierten Rate konfiguriert ist.

12. Knoten (N2) nach Anspruch 11, wobei das besagte Steuermodul (CM2) weiterhin dafür konfiguriert ist, die besagte erste Folge für ein Zeitintervall (TS') zu überwachen und nach Ablauf des besagten Zeitintervalls (TS') einen Zustand der besagten Vorrichtung (SRRX22) zu ermitteln und den besagten zeitlichen Versatz (E) auf der Basis des ermittelten Zustands der besagten Vorrichtung (SRRX22) und der besagten ersten Daten (DS) zu berechnen.

13. Knoten (N2) nach Anspruch 11, wobei der besagte Empfänger (RX2) weiterhin eine weitere Vorrichtung (SRRX21) umfasst,, welche dafür konfiguriert ist, eine erste Folge von Zuständen auf der Basis der besagten zweiten Daten (DS) zyklisch zu durchlaufen, wobei die besagte zweite Folge periodisch ist, wobei die besagte weitere Vorrichtung (SRRX1) dafür konfiguriert ist, ihren Zustand bei einer mit einer Taktrate (CR1) des besagten ersten Taktsignals korrelierten Rate zu ändern.

14. Knoten (N2) nach Anspruch 13, wobei die besagte Vorrichtung (SRRX22) und die besagte weitere Vorrichtung (SRRX21) linear rückgekoppelte Schieberegister sind.

15. Knoten (N2) nach Anspruch 14, wobei die besagte Vorrichtung (SRRX22) und die besagte weitere Vorrichtung (SRRX21) linear rückgekoppelten Fibonacci-Schieberegistern maximaler Länge sind.

**Revendications**

1. Procédé pour calculer une différence (DD) entre un premier retard de propagation (D1) d'une première ligne de transmission (TL1) et un deuxième retard de propagation (D2) d'une deuxième ligne de transmission (TL2), dans lequel lesdites première et deuxième lignes de transmission connectent un premier noeud (N1) et un deuxième noeud (N2) d'un réseau optique, ledit procédé comprenant, au niveau dudit deuxième noeud (N2), les étapes suivantes :

a) recevoir des premières données (DS) à partir dudit premier noeud (N1) le long de ladite première ligne de transmission (TL1) ;
**caractérisé par** les étapes suivantes, au niveau dudit deuxième noeud (N2) :
b) calculer un décalage temporel (E) entre un premier signal d'horloge récupéré à partir desdites premières données (DS) et un deuxième signal d'horloge généré au niveau dudit deuxième noeud (N2) ;
c) échanger ladite première ligne de transmission (TL1) et ladite deuxième ligne de transmission (TL2) ;
d) recevoir des deuxièmes données (DS) à partir dudit premier noeud (N1) le long de ladite deuxième ligne de transmission (TL2) ; et
e) calculer ladite différence (DD) sur la base desdites premières données (DS), desdites deuxièmes données (DS) et dudit décalage temporel (E).

2. Procédé selon la revendication 1, dans lequel ladite étape b) comprend en outre la fourniture d'un dispositif (SRRX22) avec une première séquence d'états sur la base desdites premières données(DS), dans lequel ladite première séquence d'états est une séquence périodique d'états, ledit dispositif (SRRX22) changeant son état à une fréquence correspondant à une fréquence d'horloge (CR2) dudit deuxième signal d'horloge.

3. Procédé selon la revendication 2, dans lequel ladite étape b) comprend en outre la surveillance de ladite première séquence pendant un intervalle de temps (TS') et, une fois que intervalle de temps (TS') s'est écoulé, la détermination d'un état dudit dispositif (SRRX22) et le calcul dudit décalage temporel (E) sur la base de l'état déterminé dispositif (SRRX22) desdites premières données (DS).

4. Procédé selon la revendication 3, dans lequel ladite étape e) comprend en outre les étapes suivantes:

   - fournir un autre dispositif (SRRX21) avec une deuxième séquence d'états sur la base desdites deuxièmes données (DS), dans lequel ladite deuxième séquence d'états est périodique, ledit autre dispositif (SRRX21) changeant son état à une fréquence correspondant à une fréquence d'horloge (CR1) dudit premier signal d'horloge ; et
   - déterminer un état dudit dispositif (SRRX22) et un état dudit autre dispositif (SRRX21) et calculer ladite différence (DD) sur la base de l'état détermine dudit dispositif (SRRX22), de l'état déterminé dudit autre dispositif (SRRX21) et dudit décalage temporel (E).

5. Procédé selon la revendication 4, dans lequel ladite étape b) comprend en outre les étapes suivantes :

   - fournir ledit autre dispositif (SRRX21) avec ladite première séquence d'états sur la base desdites premières données (DS), ledit autre dispositif (SRRX21) changeant son état à une fréquence correspondant à une fréquence d'horloge (CR1) dudit premier signal d'horloge ; et
   - une fois que ledit intervalle de temps (TS') s'est écoulé, déterminer un état dudit dispositif (SRRX22) et un état dudit autre dispositif (SRRX21) et calculer ledit décalage temporel (E) sur la base de l'état déterminé dudit dispositif (SRRX22) et de l'état déterminé dudit autre dispositif (SRRX21).

6. Procédé selon l'une quelconque des revendications précédentes, dans lequel premières données (DS) et lesdites deuxièmes données (DS) comprennent des valeurs de sortie (OPV) d'un registre à décalage à rétroaction linéaire (SRTX1).

7. Procédé selon la revendication 3, dans lequel à ladite étape b) ledit intervalle de temps (TS') est une fraction d'un temps d'échange maximum (TSM) indiquant un temps maximum nécessaire pour échanger la première ligne de transmission (TL1) et la deuxième ligne de transmission (TL2).

8. Procédé selon la revendication 1, dans lequel lesdites premières données (DS) et lesdites deuxièmes données (DS) comprennent au moins une multitrame.

9. Procédé selon la revendication 4, dans lequel ladite étape e) comprend en outre le comptage des périodes de répétition de ladite première séquence et de ladite deuxième séquence.

10. Noeud (N2) pour un réseau optique, ledit noeud (N2) étant **caractérisé par** un récepteur (RX2) configuré pour recevoir des premières données (DS) à partir d'une première ligne de transmission (TL1), pour échanger ladite première ligne de transmission (TL1) et une deuxième ligne de transmission (TL2) et pour recevoir des deuxièmes données (DS) à partir de la deuxième ligne de transmission (TL2), ledit noeud (N2) comprenant une horloge locale avec une fréquence d'horloge (CR2), ledit récepteur (RX2) comprenant un module de commande (CM2) configuré pour :

    - calculer un décalage temporel (E) entre un premier signal d'horloge récupéré à partir desdites premières données (DS) et un deuxième signal d'horloge généré par ladite horloge locale au niveau de ladite fréquence d'horloge (CR2) ;
    - calculer une différence (DD) entre un premier retard de propagation (D1) de ladite première ligne de transmission (TL1) et un deuxième retard de propagation (D2) de ladite deuxième ligne de transmission (TL2) sur la base desdites premières données (DS), desdites deuxièmes données (DS) et dudit décalage temporel (E).

**11.** Noeud (N2) selon la revendication 10, dans lequel ledit récepteur (RX2) comprend en outre un dispositif (SRRX22) bouclant un cycle d'une première séquence d'états sur la base desdites premières données (DS), ladite première séquence étant périodique, ledit dispositif (SRRX22) étant configuré pour changer son état à une fréquence correspondant à ladite fréquence d'horloge (CR2) dudit deuxiéme signal d'horloge.

**12.** Noeud (N2) selon la revendication 11, dans lequel ledit module de commande (CM2) est en outre configuré pour surveiller ladite première séquence pendant un intervalle de temps (TS') et, une fois que ledit intervalle de temps (TS') s'est écoulé, pour déterminer un état dudit dispositif (SRRX22) et pour calculer ledit décalage temporel (E) sur la base de l'état déterminé dudit dispositif (SRRX22) et desdites premières données (DS).

**13.** Noeud (N2) selon la revendication 11, dans lequel ledit récepteur (RX2) comprend en outre un autre dispositif (SRRX21) configuré pour boucler un cycle d'une deuxième séquence d'états sur la base desdites deuxièmes données (DS), ladite deuxième séquence étant périodique, ledit autre dispositif (SRRX21) étant configuré pour changer son état à une fréquence correspondant à une fréquence d'horloge (CR1) dudit premier signal d'horloge.

**14.** Noeud (N2) selon la revendication 13, dans lequel ledit dispositif (SRRX22) et ledit autre dispositif (SRRX21) sont des registres à décalage à rétroaction linêaire.

**15.** Noeud (N2) selon la revendication 14, dans lequel ledit dispositif (SRRX22) et ledit autre dispositif (SRRX21) sont des registres à décalage à rétroaction linéaire de Fibonacci de longueur maximale.

EP 2 615 752 B1

Figure 1

Figure 2

EP 2 615 752 B1

| TX1 | RX2 | CM2 |
|-----|-----|-----|

start

301 — operate SRTX1

302 — send DS → receive DS from TL1 — 303

synchronize SRRX21 — 304

synchronize SRRX22 — 305

306 — wait Ts'

307 — receive DS from TL1

308 — synchronize SRRX21 → compute E', E — 309

310 — synchronize SRRX22

311 — N1, N2 swap TL1, TL2

312 — receive DS from TL2

313 — synchronize SRRX21 → compute DD — 314

end

## Figure 3

(step 302)

| DS | DS | DS | DS | DS |

t-tx(1)  t-tx(2)  t-tx(3)  t-tx(4)  t-tx(5)  t

## Figure 4a

(step 302)

| DS | DS | DS | DS | DS |

t-tx(1)  t-tx(2)  t-tx(3)  t-tx(4)  t-tx(5)  t

(step 303)

| DS | DS | DS | DS | DS |

t-rx1(1)  t-rx1(2)  t-rx1(3)  t-rx1(4)  t-rx1(5)  t

D1

## Figure 4b

(step 302)

| DS | DS | DS | DS | DS |

t-tx(1)  t-tx(2)  t-tx(3)  t-tx(4)  t-tx(5)  t

(step 303, 304)

| DS | DS | DS | DS | DS |

t-rx1(1)  t-rx1(2)  t-rx1(3)  t-rx1(4)  t-rx1(5)  t

(step 305)

t-rx1(1)'  t-rx1(2)'  t-rx1(3)'  t-rx1(4)'  t-rx1(5)'  t

## Figure 4c

## Figure 4d

Figure 4e

Figure 4f

Figure 4g

EP 2 615 752 B1

SRTX1

CE

OPV

| 1 | 0 | 1 | 1 |
|---|---|---|---|

S1  S2  S3  S4

OPV

## Figure 5a

SRRX21

CE'

| 1 | 0 | 1 | 1 |
|---|---|---|---|

S1'  S2'  S3'  S4'

## Figure 5b

EP 2 615 752 B1

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011079460 A
- US 2011122775 A
- EP 0616444 A

### Non-patent literature cited in the description

- IEEE Standard for a Precision Clock Synchronization Protocol for Networked Measurements and Control Systems. IEEE Instrumentation and Measurements Society, 24 July 2008